# EUROPÄISCHE PATENTANMELDUNG

(11) **EP 4 215 595 A1**
(43) Veröffentlichungstag der Anmeldung: **26.07.2023**
(21) Anmeldenummer: 22152615.5
(22) Anmeldetag: 21.01.2022
(51) Int. Cl.: C09K 17/52, A01G 13/02

(54) **FORMKÖRPER AUF BASIS VON PROTEINHALTIGEN BIOPOLYMEREN**

(71) Anmelder: Secalflor GmbH, 16515 Oranienburg (DE)
(72) Erfinder: SCHMETSDORF, Dietmar, 16831 Rheinsberg (DE)
(74) Vertreter: Hertin und Partner Rechts- und Patentanwälte PartG mbB

(57) **Zusammenfassung**

Die Erfindung betrifft in einem ersten Aspekt einen Formkörper auf Basis von proteinhaltigen Biopolymeren, wobei der Formkörper aus einer Formmasse umfassend 25 bis 50 Gew.-% proteinhaltige Rohstoffe, 35 bis 70 Gew.-% Wasser, 10 bis 25 Gew.- % Pflanzenfasern, 12 bis 25 Gew.-% mineralische Stoffe und 1 bis 8 Gew.-% Nährstoffe hergestellt wird, wobei während eines Verfahrens zur Herstellung der Formkörper keine zusätzlichen Treibmittel der Formmasse hinzugefügt werden. Die Erfindung betrifft in einem zweiten Aspekt eine Vorrichtung zur Herstellung des Formkörpers.

## Beschreibung

Die Erfindung betrifft Formkörper mit reproduzierbaren einheitlichen Eigenschaften, die auf Basis von proteinhaltigen Biopolymeren hergestellt werden und vorzugsweise für die Verwendung als Pflanzplatten oder Isolierplatten geeignet sind.

### HINTERGRUND UND STAND DER TECHNIK

Erosionsvorgänge haben die Landschaften auf unserer Erde entscheidend geprägt. Seit Beginn der verstärkten Ackernutzung nach vorheriger Waldrodung ist eine Form der Bodenerosion getreten, die mit Zunahme der Nutzungsintensität erhebliche Ausmaße angenommen hat. Damit sind Boden- und Schadstoffverlagerungen auf den Flächen selbst verbunden, die mehr oder weniger schnell zur Ausbildung von Abtrags- und Auftragsbereichen des Bodens führten und noch führen. Die schon bestehende Heterogenität auf den landwirtschaftlich genutzten Flächen nimmt zu. Erosion führt an Hängen zum Verlust von humosem Oberbodenmaterial. Die Folge ist eine Verminderung der Wasserspeicherfähigkeit, eine Verarmung an Pflanzennährstoffen und eine verminderte Fließ- und Filterstrecke bis zum Grundwasser. In Senken und Mulden kommt es dagegen zur Anreicherung von Nährstoffen und Chemikalien aus Dünge- und Pflanzenschutzmitteln.

In steigendem Maße kommt es zur negativen Veränderung der Bodenfunktion von Flächen, die zur Aufrechterhaltung des Stoffgleichgewichtes in Landschaften unbedingt erhalten bleiben müssen. Dazu kommt die Erhaltung der Produktionsfunktion, von derwiederum die Bedeckung mit Pflanzen oder Pflanzenrückständen und damit der Schutz der Bodenoberfläche bestimmt wird. Mit Zunahme der Degradationserscheinungen, die überall verstärkt zu beobachten sind, kommt es verstärkt zur Wüstenbildung. Zu wenig wird den erodierenden Kräften - Wind und Wasser - sowie dem Prozess der physikalischen und chemischen Verwitterung Einhalt geboten.

45% der Landfläche der Erde sind von Trockengebieten geprägt. 70% davon sind von Wüstenbildung bedroht. Besonders in Afrika (ca. 9 Millionen km²), Asien (12 Millionen km²) und Lateinamerika (4 Millionen km²) schreitet der Prozess der Ressourcenzerstörung ungehindert voran. Hier spielen neben den klimatischen auch die historischen, politischen, kulturellen und ökonomischen Verhältnisse eine große Rolle.

Auch in Europa sind mittlerweile 25% der landwirtschaftlichen Nutzflächen von durch Menschen verursachte Zerstörung bedroht. Diese Bodenzerstörung gefährdet nicht nur weltweit die Versorgung der Bevölkerung mit Nahrungsmitteln (derzeitig 30% weniger Produktion von Nahrungsmitteln), sondern bewirkt auch einen immer weiteren Rückgang der Wasserressourcen und der CO₂-Speicherung in den betroffenen Gebieten. Die Tendenz ist steigend.

Es ist bekannt, dass Bodenerosion und Wüstenbildung durch Bepflanzung der betroffenen Flächen verlangsamt werden können. Dies kann jedoch aufgrund der geringeren Bodenqualität schwierig sein. Dies wird jedoch durch die schlechte Bodenqualität besonders erschwert. Um die Überlebenschancen von Pflanzen in armen Böden zu verbessern, werden sie bekanntlich zunächst in kleine, in der Regel aus Kunststoff bestehende Behälter gepflanzt, bevor sie in den Boden gebracht werden. Dieser Prozess erfordert mehrere Arbeitsschritte und erzeugt unerwünschte Abfälle, welche einen hohen CO₂-Austoß verursachen.

Es besteht also ein Bedarf an einem System, mit dem sich schnell eine geschlossene Pflanzendecke erzeugen lässt, um den Folgen der Bodenverschlechterung entgegenzuwirken. Es besteht auch ein Bedarf an einem System, wobei ausschließlich oder hauptsächlich in der Natur vorhandene Ausgangsstoffe Verwendung finden, damit keine Erdölprodukte mehr in den Stoffkreislauf ihren Eintritt finden.

Um einige dieser Bedürfnisse zu befriedigen, wurden Formkörper entwickelt, die aus natürlichen oder recycelbaren Materialien hergestellt werden. Die Formkörper sind porös, ermöglichen den Wasser- und Nährstofffluss und ahmen die Funktion des Bodens nach. Sie werden derzeit als Hilfsmittel für die Bepflanzung und Isolierung verwendet.

Die Anforderungen, die an Materialien für die Verwendung in solchen Formkörpern gestellt werden, sind sehr unterschiedlich. Je nachdem, ob diese als Pflanzplatten im Gartenbau und Landschaftsbau, als Isolierplatten in der Bauindustrie, neue Verbundwerkstoffe oder als Textilgrundstoff eingesetzt werden sollen, werden besondere Forderungen hinsichtlich der Abbaubarkeit, der Elastizität, der Festigkeit, des Wärmedurchganges, des Schalldurchganges oder der Tragbarkeit gestellt.

Bei der Herstellung von Produkten aus sogenannten nachwachsenden Rohstoffen, beispielsweise proteinhaltigen Biopolymeren, treten immer wieder Probleme auf, die die Maßhaltigkeit und die Homogenität der produzierten Produkte betreffen. Zum einen sind diese Probleme darin begründet, dass die in der Natur wachsenden Rohstoffe durch die sich ständig ändernden Wachstumsbedingungen unterschiedliche, physikalische, chemische und auch mechanische Eigenschaften aufweisen. Auch wenn diese natürlichen Rohstoffe mit anorganischen Substanzen oder synthetisch hergestellten Materialien gemischt (verschnitten) werden, ist die Reproduzierbarkeit der physikalischen, chemischen und mechanischen Eigenschaften nicht immer zu erreichen.

Wenn man versucht, solche nachwachsenden Materialien zu porösen Körpern zu formen, besteht eine der vielen Schwierigkeiten darin, dass beim Trocknen eines festen Körpers aus einem Flüssigkeitsgemisch die Außenflächen des festen Körpers dazu neigen, viel dichter und weniger porös zu sein als die inneren Teile. Dies führt zu dem Problem, dass solche Körper für die Bepflanzung nicht geeignet sind, da sie sich nicht leicht mit dem örtlichen Boden verbinden oder Flüssigkeiten nicht in das innere Porennetz eindringen können. Es wäre daher wünschenswert, einen organischen Formkörper mit gleichmäßiger Porosität sowohl in den inneren als auch in den äußeren Teilen bereitzustellen.

Es wäre auch wünschenswert einen solchen Formkörper mit hoher Luftporengehalt als Dämmstoff zu entwickeln. Um die Artenvielfalt in Städten zu erhöhen, wäre es auch wünschenswert, solche Formkörper zu entwickeln, die sowohl zur Dämmung von Dächern und Wänden als auch zur Begrünung dieser Flächen eingesetzt werden können.

Derzeit sind keine Herstellungsverfahren bekannt, mit denen solche Formkörper mit einer vorbestimmten Dicke, Blasengröße und Dichte hergestellt werden können, so dass ein stabiler Formkörper mit geringer Dichte, hohem Wasserspeichervermögen, guter Wasser- und Luftdurchlässigkeit, Korrosionsbeständigkeit und Temperaturbelastbarkeit bereitgestellt werden kann.

### AUFGABE DER ERFINDUNG

Aufgabe der Erfindung ist es, einen Formkörper mit einheitlichen vorteilhaften Eigenschaften durch ein reproduzierbares Verfahren bereitzustellen, welcher die Nachteile des Standes der Technik überwindet. Es war auch eine Aufgabe der Erfindung, eine Vorrichtung für die Herstellung des erfindungsgemäßen Formkörpers bereitzustellen.

### DETAILLIERTE BESCHREIBUNG DER BEVORZUGTEN AUSFÜHRUNGSFORMEN

Gelöst wird die Aufgabe durch die Merkmale der unabhängigen Ansprüche. Vorteilhafte Ausgestaltungen der Erfindung sind in den abhängigen Ansprüchen und in der Beschreibung offenbart.

In einem ersten Aspekt betrifft die Erfindung einen Formkörper auf Basis von proteinhaltigen Biopolymeren, wobei der Formkörper aus einer Formmasse umfassend 25 bis 50 Gew.-% proteinhaltige Rohstoffe, 35 bis 70 Gew.-% Wasser, 10 bis 25 Gew.- % Pflanzenfasern, 12 bis 25 Gew.-% mineralische Stoffe und 1 bis 8 Gew.-% Nährstoffe hergestellt wird, wobei während eines Verfahrens zur Herstellung der Formkörper keine zusätzlichen Treibmittel der Formmasse hinzugefügt werden. Die Zusammensetzung der Formmasse umfasst vorzugsweise auch feinkörnige anorganische Zuschlagsstoffe.

In einem weiteren Aspekt betrifft die Erfindung einen Formkörper auf Basis von proteinhaltigen Biopolymeren, wobei der Formkörper aus einer Formmasse umfassend mindestens 25 Gew.-% proteinhaltige Rohstoffe, mindestens 35 Gew.-% Wasser, mindestens 10 Gew.-% Pflanzenfasern, mindestens 12 Gew.-% mineralische Stoffe und mindestens 1 Gew.-% Nährstoffe hergestellt wird, wobei vorzugsweise während eines Verfahrens zur Herstellung der Formkörper keine zusätzlichen Treibmittel der Formmasse hinzugefügt werden. Die Zusammensetzung der Formmasse umfasst vorzugsweise auch feinkörnige anorganische Zuschlagsstoffe.

Es wurde festgestellt, dass sich die obigen Zusammensetzungen besonders gut für ein Massenherstellungsverfahren, vorzugsweise ein kontinuierliches Verfahren, eignet. Die erfindungsgemäße Zusammensetzung weist geeignete rheologische Eigenschaften zum Mischen, Schäumen und Extrudieren auf. Zudem wurde festgestellt, dass sich die Zusammensetzung aufgrund des geringeren Wassereinsatzes für die Feinabstimmung der pH- und Feuchtigkeitseigenschaften der Zwischen- und Endprodukte eignet.

Überraschenderweise trägt die erfindungsgemäße Zusammensetzung zur Herstellung eines fein kontrollierten Schaums mit besonders vorteilhafter Blasengröße, -form und -dichte bei. Der Schaum kann vorteilhafterweise ohne den Zusatz von Treibmitteln zu einer hohen Viskosität verarbeitet werden. Diese Schaumeigenschaften haben einen starken Einfluss auf die Definition der endgültigen Porosität des Endprodukts, da die Blasen zu Poren getrocknet werden können. Die Einstellbarkeit der Schaumeigenschaften ist sehr vorteilhaft bei der Herstellung von Formkörpern auf der Basis von proteinhaltigen Biopolymeren, die sehr spezifische Dichten und Porositäten aufwiesen.

Aufgrund der hohen Viskosität des Schaums kann dieser zu einem Strang mit einem definierten Durchmesser oder einem definierten Querschnitt extrudiert werden. Dadurch können Formkörper mit genau vordefinierten Abmessungen hergestellt werden.

Es wurde zudem überraschenderweise festgestellt, dass die oben genannte Zusammensetzung zur Herstellung eines Formkörpers mit besonders vorteilhaften Eigenschaften führt. Die erfindungsgemäßen Formkörper weisen sowohl im Inneren als auch im Randbereich eine offenporige Struktur auf. Die Dichte der Formkörper ist gering, sodass sie eine gute Wasser- und Luftdurchlässigkeit aufweisen. Die geringe Dichte trägt dazu bei, dass die Formkörper sich besonders gut für die Bepflanzung mit Samen eignen, da sie genügend Wasser für das Wachstum der Samen zurückhalten können und gleichzeitig für ausreichende Anwesenheit von Luft sorgen. Dies ist besonders in trockenen Regionen mit schwierigen Böden von Vorteil. Darüber hinaus ist die geringe Dichte besonders wirksam bei der Verringerung der Übertragung von Wärme und Schall.

Die Formkörper sind aufgrund ihrer Zusammensetzung und Materialeigenschaften besonders geeignet, Saatgut und Keimlinge in engen Kontakt mit allen drei Bodenphasen, also Feststoff, Wasser und Luft, zu bringen. Der Nährstoff-, der Protein- und der Mineralgehalt ist so ausgewählt, dass er das Wachstum einer Vielzahl von Pflanzen maximiert. Das Ergebnis ist ein Formkörper, der nicht nur kleinen Pflanzen physische Stabilität bietet, sondern auch ein besonders fruchtbares Umfeld, wodurch sich die Erfolgsquote beim Anpflanzen drastisch verbessert.

Überraschend war auch, dass die erfindungsgemäßen Formkörper besonders widerstandsfähig gegenüber verschiedenen Temperaturen sind. Dies ist besonders vorteilhaft, da sie in einer Vielzahl von Bodentypen und Klimazonen eingesetzt werden können.

Die erfindungsgemäßen Formkörper können aufgrund ihrer Zusammensetzung und ihrer Fähigkeit, sich mit dem örtlichen Boden zu vernetzen, schnell und nahtlos in den Boden integriert werden, ohne dass Abfall anfällt. Durch die Reduzierung von Abfällen und die Verbesserung des Pflanzenwachstums kann die CO₂-Belastung synergetisch reduziert werden.

Die erfindungsgemäßen Formkörper weisen eine überraschend geeignete Festigkeit auf, sodass sie gut mechanisch bearbeitbar sind. Die strukturellen Eigenschaften der Formkörper sind überraschenderweise sowohl für die Einsetzung in den Boden für landwirtschaftliche Zwecke als auch in Dächern und Wänden für Isolationszwecke geeignet.

Die Eigenschaften der erfindungsgemäßen Formkörper sind für die genannten Verwendungszwecke besonders vorteilhaft, wobei aufgrund der Zusammensetzung der Formkörper diese Eigenschaften in der Massenherstellung genau abgestimmt werden können.

In einer bevorzugten Ausführungsform der Erfindung umfasst ein Verfahren zur Herstellung des Formkörpers eine Trocknung durch Mikrowellen, wobei die Trocknung vorzugsweise auf einem fließenden Förderband erfolgt. Überraschenderweise wurde festgestellt, dass die Trocknung durch Mikrowellen im gesamten Produkt, d. h. vom Kern bis zu den Oberflächen, mit einer ähnlichen Geschwindigkeit erfolgt. Das resultierende Produkt war in seinen Eigenschaften viel einheitlicher. Darüber hinaus konnte das Verfahren äußerst schnell und effizient durchgeführt werden. Indem man das Produkt durch einen Bereich oder eine Kammer fließen lässt, in dem bzw. der Mikrowellen ausgestrahlt werden, kann der Prozess kontinuierlich durchgeführt werden, was die Herstellungskosten erheblich senkt und Abfall vermeidet.

In einer bevorzugten Ausführungsform der Erfindung umfasst ein Verfahren zur Herstellung des Formkörpers einen Schritt, bei dem die proteinhaltigen Rohstoffe zusammen mit den mineralischen Stoffen und den Nährstoffen in einem Behälter mit laufendem Rührwerk in Wasser zu einer homogenisierten Masse vermischt werden. Vorzugsweise ist die homogenisierte Masse eine Suspension.

Es wurde festgestellt, dass diese Komponenten miteinander verträglich sind und sich besonders gut miteinander mischen lassen. Durch die Herstellung einer homogenen Suspension lassen sich die Eigenschaften des Endprodukts leicht vorhersagen. Dies ist besonders nützlich, um trotz kleiner Schwankungen bei den Ausgangsstoffen einen kontinuierlichen Herstellungsprozess zu ermöglichen.

Der Behälter ist vorzugsweise ein Rotor-Stator-Mischer wobei der Rotor mit einer Geschwindigkeit zwischen 5 - 15, vorzugsweise 8 - 12, besonders bevorzugt circa 9,86 Umdrehungen pro Minute rotiert. Bei dieser Geschwindigkeit konnten Wasser, proteinhaltige Rohstoffe, mineralische Stoffe und Nährstoffe überraschend gut homogenisiert werden, ohne die Gesamtprozesszeit zu verlängern.

In einer weiteren bevorzugten Ausführungsform der Erfindung umfasst das Verfahren zur Herstellung des Formkörpers einen Schritt, bei dem die Pflanzenfasern während der Vermischung der homogenisierten Masse in den Behälter eingeführt werden. Die Pflanzenfasern sind der Bestandteil mit der größten Tendenz zu natürlichen Schwankungen. Vorzugsweise werden die Pflanzenfasern in einem früheren Schritt getrocknet. Vorzugsweise umfassen die Pflanzenfasern Holzfasern mit einer Feuchte zwischen 12 - 16%. Die Rate, mit der die Pflanzenfasern zugegeben werden, kann zur Einstellung der Viskosität und Dichte der Mischung verwendet werden, um die gewünschten Endeigenschaften zu erhalten.

Der pH-Wert der Mischung kann von den verwendeten Bestandteilen und deren relativen Mengen abhängen. Vorzugsweise ist das Mischverfahren einschließlich der Zugabe der Pflanzenfasern so gestaltet, dass eine homogenisierte Masse mit einem pH-Wert zwischen 5,0 und 7,5, vorzugsweise zwischen 5,5 - 7,5, noch bevorzugter zwischen 5,8 - 7,0 entsteht. Die meisten Pflanzen benötigen im Wurzelbereich einen pH-Wert zwischen 5,5 und 7,5. Geringfügige Abweichungen nach oben oder unten haben keine schädlichen Auswirkungen auf das Wurzelsystem. Hiermit kommen diese gut zurecht. Durch die Einstellung des pH-Wertes auf diesen Wert ist der Formkörper besonders gut geeignet, das Pflanzenwachstum zu fördern.

In einer weiteren bevorzugten Ausführungsform der Erfindung erfolgt die Vermischung vorzugsweise bei einer Temperatur zwischen 3° - 35°C, vorzugsweise zwischen 15 - 25°C. Dies ist besonders vorteilhaft, da die Vermischung bei Raumtemperatur und unter Umgebungsbedingungen in einer Vielzahl von Klimazonen und zu verschiedenen Tages- und Nachtzeiten erfolgen kann. Es wird keine Energie zum Heizen oder Kühlen der Mischanlage benötigt.

Vorzugsweise ist die Vermischung dafür konfiguriert, die Viskosität der homogenisierten Masse auf 10² mPas - 10² Pas abzustimmen. In einer weiteren bevorzugten Ausführungsform der Erfindung ist die Vermischung vorzugsweise dafür konfiguriert, dass die homogenisierte Masse einen Feuchtegehalt zwischen 59 - 65% aufweist. Ein Feuchtegehalt in diesem Bereich ermöglicht eine einfache Weiterverarbeitung, einschließlich des Aufschäumens und Extrudierens, wobei eine sehr gute Schaumviskosität und Porosität beim Trocknen des Formkörpers erhalten bleiben.

In einer weiteren bevorzugten Ausführungsform der Erfindung umfasst das Verfahren zur Herstellung des Formkörpers einen Schritt, bei dem die homogenisierte Masse bei Anwesenheit von Luft verschäumt wird. Vorzugsweise ist die Luft Umgebungsluft. Die Luft kann vorzugsweise in die homogenisierte Masse gepumpt werden. Die Verschäumung erfolgt vorzugsweise in einem Mischer bei einer Temperatur zwischen 3° - 35°C, vorzugsweise zwischen 15 - 25°C. Je nachdem, ob das Verfahren als Batch- oder kontinuierlicher Prozess konfiguriert ist, kann dies derselbe Mischer sein, der für die Vermischung verwendet wird oder ein zweiter Mischer. Im Falle eines kontinuierlichen Herstellungsverfahrens erfolgt das Aufschäumen in einem zweiten Mischer. Der Mischer ist vorzugsweise so konfiguriert, dass er einen stabilen Schaum erzeugt.

Der Rotor des Mischers dreht sich vorzugsweise mit einer Geschwindigkeit zwischen 250 - 500 1/min, vorzugsweise 300 - 400 1/min (Umdrehungen pro Minute), besonders bevorzugt circa 360 Umdrehungen pro Minute. Eine Verweilzeit der homogenisierten Masse bei der Verschäumung beträgt vorzugsweise zwischen 45 - 90 Sekunden, noch bevorzugter circa 63 Sekunden beträgt.

Die Drehzahl des Rotors beeinflusst die Qualität des erhaltenen Schaumes, weil in den Scherspalten die Luft verwirbelt und sozusagen geteilt wird. Bei einer höheren Drehzahl werden die im Schaum entstandenen Luftbläschen kleiner, sodass der Schaum stabiler wird. Eine Drehzahl von circa 360 1/min hat einen überraschend gut verarbeitbaren Schaum erzeugt.

Unter Schaum versteht man vorzugsweise eine Dispersion von Gas in einer Flüssigkeit oder einem Feststoff. Schaum umfasst vorzugsweise Luftblasen, die von dünnen Flüssigkeitsfilmen umgeben sind. In diesem Fall ist die Flüssigkeit die wässrige Suspension, während das Gas die Luft ist. Die Flüssigkeit enthält Komponenten, die mehr oder weniger hydrophil sind. Diese haben die Tendenz, sich zu ordnen, um eine Grenzfläche zwischen der Luft und der Flüssigkeit zu bilden, wobei die Grenzfläche in der Regel eine Blase definiert. Da eine äußere Schicht der Blase tendenziell hydrophiler ist als eine innere Schicht, wird die doppelschichtige Grenzfläche oft als Schaumlamelle bezeichnet. Der Schaum stellt dabei ein sehr komplexes Produkt dar, dessen Eigenschaften nur sehr schwer kontrolliert werden können. Zur Ermittlung der Einflussgrößen auf den entstandenen Schaum werden die einzelnen Phasen untersucht und auf ihren Einfluss hin analysiert. Ein molekulares Verständnis der Grenzfläche ist der Schlüssel, um die Eigenschaften der Grenzflächen und damit die Schaumeigenschaften zu kontrollieren.

Materialien wie Roggen, die wässrig lösliche Proteine und Pentosane enthalten, können als Schaumbildner verwendet werden. Die wässrig löslichen Bestandteile sind in der wasserlöslichen flüssigen Phase lokalisiert. Bei Betrachtung der Absorption der Proteine an der Wasser-Luft-Grenzfläche einer Mischung, die Wasser und Roggen umfasst, wurde überraschenderweise festgestellt, dass die geladenen Proteinmoleküle die Eigenschaften der Grenzfläche stark beeinflussen.

Die Oberflächenladungen der wasserlöslichen Proteine und die daraus resultierende elektrische Doppelschicht, d.h. die Grenzfläche oder Schaumlamelle, wird durch den pH-Wert der Proteinlösung stark beeinflusst. Im Ergebnis geht es hier um die von den Proteinen erzeugten elektrischen Felder an der Grenzfläche. Dies wird im Wesentlichen durch den pH-Wert der homogenisierten Masse bestimmt. Ein Optimum an Schaumstabilität und dichter Kugelpackung wird bei einem pH-Wert von 5,8 bis 7,5 erreicht.

Die im Schaum gebildeten Blasen haben zunächst die Form von Polyedern mit gekrümmten Oberflächen. Durch die Zugabe von Flüssigkeit, vorzugsweise Wasser, in diesem Stadium können diese Blasen abgerundet und ihre Dichte erhöht werden. Der Schaum erhält dadurch eine höhere Stabilität.

Nach einer Verweilzeit von vorzugsweise 45 - 90 Sekunden, besonders bevorzugt circa 63 Sekunden, bei dem Vermischungsschritt wird die homogenisierte Masse mit ausreichend Luftbläschen gefüllt, um eine vorbestimmte Dichte von 20 - 30% sowie eine sehr dichte Kugelpackung der Blasen zu erhalten. Die relative Feuchte bei diesen Betriebsbedingungen ist circa 45%. Vorteilhafterweise kann sowohl die Verweilzeit als auch die entsprechende Flussrate der homogenisierten Masse durch den Mischer angepasst werden, um eine vorbestimmte Dichte und/oder relative Feuchte zu erhalten. Die Verweilzeit und Flussrate hängen vorzugsweise auch von den Größen des Rotors und des Stators ab.

In einer weiteren bevorzugten Ausführungsform der Erfindung ist die Verschäumung der homogenisierten Masse dafür konfiguriert, einen Schaum mit einer relativen Dichte zwischen 15 - 35 %, vorzugsweise zwischen 20 - 30% zu erhalten, wobei die relative Dichte dem Verhältnis zwischen dem Volumen einer kontinuierlichen Flüssigkeitsmatrix, welche mehrere Blasen voneinander trennt, und dem Gesamtvolumen des Schaumes entspricht. Vorzugsweise weist der Schaum eine relative Feuchte zwischen 40 % - 50 % auf, wobei eine relative Feuchte von circa 45 % besonders bevorzugt ist.

In einer weiteren bevorzugten Ausführungsform der Erfindung werden die Blasen durch Zugabe von Flüssigkeit während der Verschäumung abgerundet. Die Kugelpackung der Blasen wird vorzugsweise auch durch Zugabe von Flüssigkeit erhöht. Die Flüssigkeit ist vorzugsweise Wasser.

In einer weiteren bevorzugten Ausführungsform der Erfindung weist der Schaum eine relative Feuchte zwischen 35 - 45% und eine bevorzugte Viskosität zwischen 10² mPas - 10² Pas.

Der so enthaltene Schaum ist sehr stabil. Dieser zeichnet sich durch hohe thermische und mechanische Belastbarkeit aus. Des Weiteren weist er eine hohe Standfestigkeit (t≥ 35 min) auf und zerfällt nicht sofort. Eine mechanische Weiterverarbeitung ist somit vorteilhafterweise gegeben, ohne dass der Schaum zusammenfällt.

In einer weiteren bevorzugten Ausführungsform der Erfindung umfasst das Verfahren zur Herstellung des Formkörpers einen Schritt, bei dem die verschäumte homogenisierte Masse mittels eines Pflugscharmischers zu einem Strang geformt wird. Der Pflugscharmischer zeichnet sich vorzugsweise durch kurze Mischzeiten, eine hohe Mischgüte, hohe Reproduzierbarkeit und schonende Produktbehandlung, sowie Wartungsarmut aus. Der Pflugscharmischer umfasst vorzugsweise mehrere Pflugschare. Die Anordnung der Pflugschare erfolgt vorzugsweise so, dass der Schaum schonend transportiert wird und die Inhaltsstoffe miteinander verbunden werden.

Vorzugsweise wird hierfür der Pflugscharmischer mit einer Drehzahl zwischen 50 - 80, vorzugsweise 55 - 70, noch bevorzugter 65 Umdrehungen pro Minute betrieben. Eine Mischzeit von 10 - 15 min, vorzugsweise von 12 min ist besonders bevorzugt. Es wurde überraschenderweise festgestellt, dass bei dieser Drehzahl die Wirkung des Pflugscharmischers besonders schonend für den Schaum ist. Dieses schonende Mischen gibt dem Produkt seine ihm zugewiesen Eigenschaften.

Durch die kontinuierliche Zuführung des Schaums zum Pflugscharmischer wird an einem Ende des Pflugscharmischers ein kontinuierlicher Strang erzeugt. Dies kann durch Bewegen des Mischers oder durch Bewegen einer Aufnahmeschale oder eines Förderbandes geschehen. In Abständen kann der Strang am Auslauf des Pflugscharmischers vorzugsweise abgeschnitten werden, um einen Teil des Stranges abzutrennen.

Optional kann der aus dem Pflugscharmischer austretende Strang zusätzlich durch eine oder mehrere Walzen weiter geformt werden. Zum Beispiel kann der Strang zu Blöcken oder Endlosbahnen geformt werden. Diese eignen sich vorteilhaft für die Verwendung als Pflanzpads oder als Isolationsrollen.

In einer weiteren bevorzugten Ausführungsform der Erfindung wird der geformte Strang mittels eines Mikrowellentrockners getrocknet. Der Strang oder die geformten nassen Zwischenprodukte werden einem Mikrowellentrockner zugeführt. Bevorzugte Einzelheiten des Trockners und des Trocknungsverfahrens werden weiter unten erläutert. Die getrockneten Stränge können nach dem Trocknen in ihre endgültige Form geschnitten werden, um den bevorzugten Formkörper bereitzustellen. Vorzugsweise werden die getrockneten Stränge auch für eine Zeitperiode zwischen 5 - 15 Minuten, noch bevorzugter circa 10 Minuten entgast bis sie auf Paletten gestapelt werden.

In einem weiteren Aspekt betrifft die Erfindung eine Vorrichtung zur Herstellung eines Formkörpers wie oben beschrieben, wobei die Vorrichtung einen Mikrowellentrockner für die Trocknung des geformten Stranges umfasst. Der Mikrowellentrockner ist vorzugsweise ein Durchlauftrockner. Vorzugsweise umfasst der Trockner eine Mehrzahl von hintereinander geschalteten Applikatoren, wobei der Trockner vorzugsweise für den Betrieb mit 50 - 60 kW konfiguriert ist.

Ein Mikrowellen-Durchlauftrockner hat eine sehr hohe Effizienz, sodass der Energieverbrauch niedrig gehalten werden kann. Das Innere des Trockners kann einen Kanal bilden, durch den die geformten Schaumstoff-Zwischenprodukte fließen können, zum Beispiel mittels einer Fließbahn. Durch effektive Gestaltung der mehreren Applikatoren können vorzugsweise im inneren Trockenkanal homogene gleich verteilte elektromagnetische Felder erzeugt werden. Die Trocknung kann so besonders gleichmäßig erfolgen, wodurch die entstehenden Formkörper gleichmäßige Eigenschaften erhalten.

Der Verlauf und die Dauer des Trockenverfahrens hängt von den Trocknungsbedingungen, dem Profil der Energie- bzw. Temperaturverteilung und der Feuchtekonzentration wie auch von der Feuchtebewegung im Schaum ab. Vorzugsweise werden für die Auswahl der Betriebsbedingungen in dem Trockner die Feuchtebindung, die Form, die Abmessungen und die temperaturabhängigen dielektrischen Eigenschaften des Schaums in Betracht gezogen.

In einer bevorzugten Ausführungsform der Erfindung umfasst der Mikrowellentrockner quer zur Strangrichtung eine linke Portion, eine zentrale Portion und eine rechte Portion, wobei jede Portion einen oder mehrere hintereinander geschalteten Applikatoren umfasst.

Vorzugsweise sind jeweils die linke und rechte Portion des Trockners dafür konfiguriert, Mikrowellen mit 10 - 20 kW, vorzugsweise 14 - 16 kW auszustrahlen. Die zentrale Portion des Trockners ist vorzugsweise dafür konfiguriert, Mikrowellen mit einer höheren Energie, vorzugsweise zwischen 15 - 25 kW, noch bevorzugter 23 - 24 kW auszustrahlen. Diese Werte sind für einen Trockner mit einer Gesamtleistung von etwa 55 kW geeignet. Unabhängig von der Gesamtleistung des Mikrowellentrockners ist es vorteilhaft, dass etwa 25 - 30 %, vorzugsweise ca. 28,6 % der Leistung auf jeweils die linke und rechte Seite des zu formenden Körpers und etwa 40 - 45%, vorzugsweise ca. 42,7 % der Leistung auf die Mitte gerichtet sind.

Durch eine Optimierung der Energieverteilung in dem Trockenkanal erfolgt eine erhöhte Absorption der elektromagnetischen Wellen in den Schaum. Überraschenderweise ermöglicht es diese Verteilung, einen viel niedrigeren Energieverbrauch zu erzielen.

Durch die strategische Verteilung der Wärmezufuhr um den geformten Schaum herum kann zudem im Schaum ein Temperaturgradient zur Oberfläche hin erzeugt werden. Dies bedeutet, dass der Schaum eine höhere Temperatur in seinem Inneren als an seiner Oberfläche erhalten kann. Dadurch kann der Partialdruck des Dampfes oder der dampfenden Flüssigkeit im Inneren des Schaumes höher sein. Dies treibt den Dampf nach außen, sodass die Oberflächen der Formkörper porös bleiben. Die isolierenden und wasserhaltenden Eigenschaften des Formkörpers können so optimiert werden.

Zudem wird durch das Verdampfen im Inneren des Schaumes die Flüssigkeit durch die Porenstruktur des Formkörpers nach außen geführt, wobei vorzugsweise die Struktur des Formkörpers makrokapillar ist. Dies ermöglicht eine sehr hohe Trocknungsgeschwindigkeit. Durch die Porosität gemeinsam mit dem Temperaturgradienten zur Oberfläche hin können auch dickere Schichten des Schaumes ohne Abriebverluste getrocknet werden. Der Gesamtübertragungsgrad kann so erhöht werden.

Durch die hohe Trocknungsgeschwindigkeit und den geringen Energiebedarf eignet sich diese Form der Trocknung besonders für automatisierte Massenherstellungsverfahren, vorzugsweise für die kontinuierliche Fertigung.

Mittels Mikrowellentrocknung entsteht die Wärme durch die direkte Umwandlung elektromagnetischer Energie in kinetische Energie der Schaummoleküle. Dies bedeutet, die

Wärme wird in dem Schaum selbst erzeugt. Die dadurch erfolgende Volumenerwärmung ist besonders vorteilhaft, da das Erhitzen der verschiedenen Komponenten selektiv erfolgen kann. Das Wasser kann dann selektiv erwärmt werden, da es höhere dielektrische Verluste als die weiteren Komponenten aufweist. Durch die selektive Erhitzung von Wasser kann die Bildung von Melanoiden durch die übrigen Komponenten des Schaumes unterdrückt werden. Melanoide entstehen oft in den herkömmlichen Trocknungsverfahren von organischen Produkten.

Wenn Stärkekörner in der Zusammensetzung verwendet werden, zum Beispiel als eiweißhaltige Rohstoffe, gerinnt ihre Eiweißhaut bei der bevorzugten Trocknungstechnik schneller. Hierdurch erfolgt eine Volumenvergrößerung der Körner um mehr als das Doppelte, sodass eine höhere spätere Wasserspeicherung im Endprodukt möglich ist.

Es wurde auch festgestellt, dass durch diese Trocknungstechnik auch eine mögliche Verkleisterung des Schaumes beseitigt werden konnte und die Trocknung ohne übermäßige Spannungen oder Risse erfolgen kann.

In einer weiteren bevorzugten Ausführungsform der Erfindung umfasst die Vorrichtung einen Rotor-Stator-Mischer für die Vermischung und/oder Verschäumung der homogenisierten Masse. Vorzugsweise umfasst die Vorrichtung einen ersten Rotor-Stator-Mischer für die Vermischung und einen zweiten Rotor-Stator-Mischer für die Verschäumung. Vorzugsweise umfasst die Vorrichtung einen Pflugscharmischer für die Formung eines Stranges aus dem Schaum.

Der Pflugscharmischer umfasst eine bevorzugte Mischstrecke zwischen 2000 - 3000 mm und einen bevorzugten Durchmesser zwischen 350 - 550 mm.

Die Vorrichtung umfasst vorzugsweise auch Filter, Reaktor, Dosiersystem, Speicher, ein Nachschubreservoir und/oder ein Endlager für Schadstoffe für den Stoffkreislauf. Vorzugsweise wird die Zuführung der verschiedenen Rohstoffe in die Vorrichtung automatisch durch eine Steuereinheit gesteuert.

Die Vorrichtung sowie die oben ausgeführten Verfahrensschritte ermöglichen es, organische Formkörper mit abgestimmten Eigenschaften zu erhalten. Vorteilhafterweise ist der pH-Wert der Formkörper, sowie deren Porosität, Wasserspeicherfähigkeit, Dichte, Wärmeleitfähigkeit und Festigkeit einstellbar.

Die Formkörper weisen vorzugsweise eine hohe und lange Wasserspeicherfähigkeit. Dies ist insbesondere für Regionen mit niedrigen Niederschlägen geeignet. Die Wasserspeicherfähigkeit kann sowohl für Trocknungsperioden als auch für Starkniederschläge optimiert werden, welche bessere landwirtschaftliche Ergebnisse in schwierigen Klimazonen und auf schwierigen Böden ermöglicht.

Vorzugsweise sind die Oberflächen der Formkörper gut mit dem Boden benetzbar. Dies ermöglicht eine nahtlose Integration in den Boden, sodass die Stabilität der Pflanze erhöht wird. Vorzugsweise wird durch die Zusammensetzung und die Porosität der Formkörper eine hohe und intensive lonenaustauschbarkeit mit dem lokalen Boden unterstützt. Die Porosität kann auch dafür optimiert werden, um einen hohen konvektiven Transport gelöster Stoffe im Wasserstrom zu erhalten. Eine hohe Ionenaustausch- und Massentransferrate kann biogen sein und die landwirtschaftlichen Ergebnisse verbessern.

Vorzugsweise können die Dichte und das Porennetz optimiert werden, um die Wärme- und Schallleitfähigkeit zu verringern. Eine Wärmeleitfähigkeit kann durch Abstimmung der Verschäumungsbedingungen auf 0,020 W/mK - 0,040 W/mK eingestellt werden.

Die Formkörper, die durch die oben erläuterten Verfahrensschritte und Vorrichtung hergestellt werden, sind überraschenderweise fest und UV-resistent. Auch Temperaturschwankungen zwischen Eis- und Wüstenbedingungen haben keinen nachteiligen Einfluss auf die Struktur des Formkörpers.

Die erfindungsgemäße Formkörper werden vorzugsweise in Pflanzplatten, Isolierschichten sowie Floristikartikeln verwendet.

In dieser Anmeldung bezeichnet der Begriff circa einen Bereich von +/-10% des genannten Wertes, vorzugsweise +/-5%, noch bevorzugter +/-3%.

## Patentansprüche

1. Formkörper auf Basis von proteinhaltigen Biopolymeren
**dadurch gekennzeichnet, dass**
der Formkörper aus einer Formmasse umfassend
25 bis 50 Gew.-% proteinhaltige Rohstoffe,
35 bis 70 Gew.-% Wasser,
10 bis 25 Gew.- % Pflanzenfasern,
12 bis 25 Gew.-% mineralische Stoffe und
1 bis 8 Gew.-% Nährstoffe
hergestellt wird, wobei während eines Verfahrens zur Herstellung der Formkörper diesen keine zusätzlichen Treibmittel hinzugefügt werden.

2. Formkörper gemäß dem Anspruch 1,
**dadurch gekennzeichnet, dass**
ein Verfahren zur Herstellung des Formkörpers eine Trocknung durch Mikrowellen umfasst, wobei die Trocknung vorzugsweise auf einem fließenden Förderband erfolgt.

3. Formkörper gemäß einem der Ansprüche 1 oder 2,
**dadurch gekennzeichnet, dass**
ein Verfahren zur Herstellung des Formkörpers einen Schritt umfasst, bei dem die proteinhaltigen Rohstoffe zusammen mit den mineralischen Stoffen und den Nährstoffen in einem Behälter mit laufendem Rührwerk in Wasser zu einer homogenisierten Masse vermischt wird,
wobei der Behälter vorzugsweise ein Rotor-Stator-Mischer ist und der Rotor mit einer Geschwindigkeit zwischen 5 - 15, vorzugsweise 8 - 12, besonders bevorzugt 9,86 Umdrehungen pro Minute rotiert.

4. Formkörper gemäß dem vorherigen Anspruch,
**dadurch gekennzeichnet, dass**
ein Verfahren zur Herstellung des Formkörpers einen Schritt umfasst, bei dem die Pflanzenfasern während der Vermischung der homogenisierten Masse in den Behälter eingeführt werden, wobei die Vermischung vorzugsweise bei einer Temperatur zwischen 3° - 35°C, vorzugsweise zwischen 15 - 25°C, erfolgt,
wobei die Vermischung vorzugsweise dafür konfiguriert ist, dass die homogenisierte Masse einen Feuchtegehalt zwischen 59 - 65% und einen pH-Wert zwischen 5,0 - 7,5 aufweist.

5. Formkörper gemäß dem vorherigen Anspruch,
**dadurch gekennzeichnet, dass**
die Vermischung dafür konfiguriert ist, eine homogenisierte Masse mit einer Viskosität zwischen 10² mPa.s - 10² Pa.s zu erhalten, wobei die homogenisierte Masse vorzugsweise eine Suspension ist.

6. Formkörper gemäß dem vorherigen Anspruch,
**dadurch gekennzeichnet, dass**
ein Verfahren zur Herstellung des Formkörpers einen Schritt umfasst, bei dem die homogenisierte Masse bei Anwesenheit von Luft verschäumt wird, wobei die Verschäumung vorzugsweise in dem Mischer bei einer Temperatur zwischen 3° - 35°C , vorzugsweise zwischen 15 - 25°C, erfolgt, wobei der Rotor des Mischers vorzugsweise mit einer Geschwindigkeit zwischen 250 - 500, vorzugsweise 300 - 400, besonders bevorzugt 360 Umdrehungen pro Minute rotiert, wobei eine Verweilzeit der homogenisierten Masse bei der Verschäumung zwischen 45 - 90 Sekunden, vorzugsweise 63 Sekunden beträgt.

7. Formkörper gemäß dem vorherigen Anspruch,
**dadurch gekennzeichnet, dass**
die Verschäumung der homogenisierten Masse dafür konfiguriert ist, einen Schaum mit einer relativen Dichte zwischen 15 - 35 %, vorzugsweise zwischen 20 - 30%, und eine bevorzugte relative Feuchte zwischen 40 % - 50 % zu erhalten, wobei die relative Dichte dem Verhältnis zwischen dem Volumen einer kontinuierlichen Flüssigkeitsmatrix, welche mehrere Blasen voneinander trennt, und dem Gesamtvolumen des Schaumes entspricht.

8. Formkörper gemäß dem vorherigen Anspruch,
**dadurch gekennzeichnet, dass**
die Blasen durch Zugabe von Flüssigkeit während der Verschäumung abgerundet werden, wobei vorzugsweise die Kugelpackung der Blasen auch durch Zugabe von Flüssigkeit erhöht wird.

9. Formkörper gemäß einem der vorherigen Ansprüche,
**dadurch gekennzeichnet, dass**
die Zugabe von Flüssigkeit dafür konfiguriert ist, dass der Schaum eine relative Feuchte zwischen 35 - 45%, einen bevorzugten pH-Wert zwischen 5,5 - 7,5, vorzugsweise 5,8 - 7,0 aufweist.

10. Formkörper gemäß einem der Ansprüche 6 - 9,
**dadurch gekennzeichnet, dass**
ein Verfahren zur Herstellung des Formkörpers einen Schritt umfasst, bei dem die verschäumte homogenisierte Masse mittels eines Pflugscharmischers mit einer Drehzahl zwischen 50 - 80, vorzugsweise 55 - 70, noch bevorzugter 65 Umdrehungen pro Minute zu einem Strang geformt wird.

11. Formkörper gemäß einem der Ansprüche 6 - 10,
**dadurch gekennzeichnet, dass**
der geformte Strang mittels eines Mikrowellentrockners getrocknet wird, wobei die Trocknung vorzugsweise auf einem fließenden Förderband erfolgt.

12. Vorrichtung zur Herstellung eines Formkörpers nach einem der vorherigen Ansprüche, **dadurch gekennzeichnet, dass**
die Vorrichtung einen Mikrowellentrockner für die Trocknung eines geformten Stranges umfasst, wobei der Mikrowellentrockner vorzugsweise ein Durchlauftrockner ist und eine Mehrzahl von hintereinander geschalteten Applikatoren umfasst, wobei der Trockner vorzugsweise für den Betrieb mit 50 - 60 kW konfiguriert ist.

13. Vorrichtung nach dem vorherigen Anspruch,
**dadurch gekennzeichnet, dass**
der Mikrowellentrockner quer zur Strangrichtung eine linke Portion, eine zentrale Portion und eine rechte Portion umfasst, wobei jede Portion einen oder mehrere hintereinander geschaltete Applikatoren umfasst.

14. Vorrichtung nach dem vorherigen Anspruch,
**dadurch gekennzeichnet, dass**
die linke Portion des Trockners dafür konfiguriert ist, Mikrowellen mit 10 - 20 kW, vorzugsweise 14 - 16 kW auszustrahlen,
die zentrale Portion des Trockners dafür konfiguriert ist, Mikrowellen mit 15 - 25 kW, vorzugsweise 23 - 24 kW auszustrahlen, und
die rechte Portion des Trockners dafür konfiguriert ist, Mikrowellen mit 10 - 20 kW, vorzugsweise 14 - 16 kW auszustrahlen.

15. Vorrichtung nach einem der Ansprüche 12 - 14,
**dadurch gekennzeichnet, dass**
die Vorrichtung einen Rotor-Stator-Mischer für die Vermischung und/oder Verschäumung der homogenisierten Masse und einen Pflugscharmischer für die Formung eines Stranges aus dem Schaum umfasst, wobei vorzugsweise der Pflugscharmischer eine Mischstrecke zwischen 2000 - 3000 mm und einen Durchmesser zwischen 350 - 550 mm aufweist.
